# EUROPEAN PATENT APPLICATION

(11) **EP 4 641 684 A1**
(43) Date of publication of application: **29.10.2025**
(21) Application number: 24863202.8
(22) Date of filing: 05.09.2024
(51) Int. Cl.: H01M 4/48, H01M 4/587, H01M 4/62, H01M 4/131, H01M 4/133, H01M 10/052, H01M 10/04, H01M 4/02

(54) **ANODE COMPOSITION, ANODE FOR LITHIUM SECONDARY BATTERY, COMPRISING SAME, LITHIUM SECONDARY BATTERY, AND METHOD FOR PREPARING ANODE COMPOSITION**

(30) Priority: 05.09.2023 KR 20230117771; 04.09.2024 KR 20240120175
(71) Applicant: LG Energy Solution, Ltd., Seoul 07335 (KR)
(72) Inventor: LEE, Su Min, Daejeon 34122 (KR); SHIN, Sun Young, Daejeon 34122 (KR); LEE, Yong Ju, Daejeon 34122 (KR)
(74) Representative: Hoffmann Eitle
(86) International application number: PCT/KR2024/013373
(87) International publication number: WO 2025/053623

(57) **Abstract**

The present invention relates to an anode composition, an anode for a lithium secondary battery, comprising same, a lithium secondary battery, and a method for preparing the anode composition, the anode composition comprising a silicon oxide represented by SiOx (0<x<2), graphite, and an anode conductive material, wherein the graphite comprises natural graphite and artificial graphite, and the BET specific surface area values of the silicon oxide represented by SiOx (0<x<2), the natural graphite, and the artificial graphite are amounts increasing in the order of artificial graphite < natural graphite < silicon oxide represented by SiOx (0<x<2).

## Description

### [Technical Field]

This application claims priority to and the benefit of Korean Patent Application Nos. 10-2023-0117771 and 10-2024-0120175 filed in the Korean Intellectual Property Office on September 5, 2023 and September 4, 2024, respectively, the entire contents of which are incorporated herein by reference.

The present application relates to a negative electrode composition, a negative electrode for a lithium secondary battery, including the same, a lithium secondary battery, and a method for preparing a negative electrode composition.

### [Background Art]

Recently, with the rapid spread of electronic devices using batteries, such as not only mobile phones, notebook-sized computers, and electric vehicles, but also power tools and cleaners, the demand for small and lightweight secondary batteries having relatively high capacity and/or high output is rapidly increasing. In particular, lithium secondary batteries are lightweight and have high energy density, and thus have attracted attention as driving power sources for electronic devices. Accordingly, research and development efforts to improve the performance of lithium secondary batteries have been actively conducted.

The lithium secondary battery generates electric energy by oxidation and reduction reactions during intercalation and deintercalation of lithium ions at a positive electrode and a negative electrode in a state in which an organic electrolytic solution or polymer electrolytic solution is filled between the positive electrode and the negative electrode, which are composed of active materials capable of intercalating and deintercalating lithium ions.

A metal oxide such as LiCoO₂, LiMnO₂, LiMn₂O₄, or LiNiO₂ is used as a positive electrode active material constituting a positive electrode of a lithium secondary battery, and a material such as metal lithium, a carbon-based material such as graphite or activated carbon, or silicon oxide (SiOₓ) is used as a negative electrode active material constituting a negative electrode. Among the negative electrode active materials, metal lithium was mainly used initially, but as the charge and discharge cycles proceeds, lithium atoms grow on the surface of the metal lithium to damage a separator, thereby damaging a battery, so that recently, a carbon-based material is usually used.

Although graphite is usually used as a negative electrode active material for a lithium secondary battery, it is difficult to increase the capacity of the lithium secondary battery because graphite has a small capacity per unit mass of 372 mAh/g. Accordingly, in order to increase the capacity of a lithium secondary battery, negative electrode materials such as silicon, tin and oxides thereof have been developed as non-carbon-based negative electrode materials having higher energy density than graphite. However, although these non-carbon-based negative electrode materials have a large capacity, these materials have a problem in that the amount of lithium consumed is large and the irreversible capacity loss is large during the initial charging and discharging due to the low initial efficiency.

In particular, a silicon-based active material is accompanied by an excessive volume change in a process of driving a battery. Accordingly, there occurs a problem in that the service life of the battery is reduced. Therefore, there is a need for the development of a negative electrode capable of effectively improving the service life characteristics of a battery while using a silicon-based negative electrode active material.

### [Related Art Document]

### [Patent Document]

Korean Patent Application Publication No. 10-2021-0070933

### [Detailed Description of the Invention]

### [Technical Problem]

The present inventors have found that in a lithium secondary battery designed in a limited space, optimum battery performance can be implemented in consideration of the types of active materials and conductive materials constituting a negative electrode composition, a specific combination of the contents of each component, and the BET specific surface area value, thereby leading to the present invention.

### [Technical Solution]

An exemplary embodiment of the present invention provides a negative electrode composition including a silicon-based active material, graphite, and a negative electrode conductive material, in which the graphite includes natural graphite and artificial graphite, the silicon-based active material includes a silicon oxide represented by SiOx (0<x<2), and the BET specific surface area values of the silicon oxide represented by SiOx (0<x<2), the natural graphite, and the artificial graphite are larger in the order of artificial graphite < natural graphite < silicon oxide represented by SiOx (0<x<2).

Another exemplary embodiment of the present invention provides a lithium secondary battery including the negative electrode and a method for preparing a negative electrode composition.

Still another exemplary embodiment of the present invention provides a battery module and a battery pack, including the lithium secondary battery.

### [Advantageous Effects]

A negative electrode composition according to an exemplary embodiment of the present invention can satisfy the correlation between the BET specific surface area of silicon oxide represented by SiOx (0<x<2), the natural graphite, and the artificial graphite in using a silicon-based active material, which is a high-capacity material, to manufacture a high-capacity battery, thereby ameliorating the decrease in the service life of existing secondary batteries, enabling rapid charging, and having excellent electrode adhesion characteristics.

In addition, the conductive path between the negative electrode active material particles can be improved by together using a silicon oxide represented by SiOx (0<x<2), graphite, and single-walled carbon nanotubes (SWCNTs) as a conductive material included in the above-described negative electrode composition, thereby improving the capacity, efficiency, and service life performance of the battery.

### [Best Mode]

Hereinafter, the present invention will be described in more detail in order to help the understanding of the present invention.

The terms or words used in the present specification and the claims should not be construed as being limited to typical or dictionary meanings, and should be construed as meanings and concepts conforming to the technical spirit of the present invention on the basis of the principle that an inventor can appropriately define concepts of the terms in order to describe his or her own invention in the best way.

The terms used in the present specification are used only to describe exemplary embodiments, and are not intended to limit the present invention. Singular expressions include plural expressions unless the context clearly indicates otherwise.

In the present invention, the term "comprise", "include", or "have" is intended to indicate the presence of the characteristic, number, step, constituent element, or any combination thereof implemented, and should be understood to mean that the presence or addition possibility of one or more other characteristics or numbers, steps, constituent elements, or any combination thereof is not precluded.

Further, a case where a part such as a layer is present "above" or "on" another part includes not only a case where the part is present "immediately above" another part, but also a case where still another part is present therebetween. Conversely, the case where a part is present "immediately above" another part means that no other part is present therebetween. In addition, a case of being "above" or "on" a reference part means being located above or below the reference part, and does not necessarily mean being located "above" or "on" in the opposite direction of gravity.

In the present specification, the "specific surface area" is measured by the BET method, and may be specifically measured by degassing an object to be measured at 130°C for 2 hours using a BET measuring apparatus (BEL-SORP-MAX, Nippon Bell), and performing N₂ adsorption/desorption at 77 K. That is, the BET specific surface area in the present specification may mean a specific surface area of the particles themselves measured by the measurement method.

In the present specification, the average length or diameter of a conductive material may be measured using SEM or TEM.

In the present specification, the "size of pores" may mean the size of the pores of the particles themselves, and may be measured by an equation according to the Barrett-Joyer-Halenda (BJH) method using a nitrogen adsorption method. Specifically, a pore area according to the size of pores was derived using a BELSORP-mini II model manufactured by BEL Japan, Inc., and then the size of pores showing the largest pore area was employed as a representative pore size. The BJH method may be used, and in the plot of the measured values, the X-axis is the diameter (Dp/nm) of the pores, and the Y-axis is dVp/dDp (cm³g⁻¹nm⁻¹).

In the present specification, the "volume of pores" may mean the volume of the pores of the particles themselves, and may be measured by an equation according to the absorption/desorption isotherm method by a nitrogen adsorption method. Specifically, a N₂ adsorption/desorption isotherm graph was derived using the BELSORP-mini II model from BEL Japan Co. Ltd., and then, the volume at the point where P/P₀ (close to 1) was the highest in absorption was used as the representative volume. The absorption/desorption isotherm method may be used, and in the plot of the measured values, the X-axis is pressure (P/P₀), and the Y-axis is Va/cm³ (STP) g⁻¹.

### <Negative electrode composition>

The negative electrode composition according to an exemplary embodiment of the present application is a negative electrode composition including a silicon-based active material, graphite, and a negative electrode conductive material, in which the graphite includes natural graphite and artificial graphite, the silicon-based active material includes a silicon oxide represented by SiOx (0<x<2), and the BET specific surface area values of the silicon oxide represented by SiOx (0<x<2), the natural graphite, and the artificial graphite are larger in the order of artificial graphite < natural graphite < silicon oxide represented by SiOx (0<x<2).

When the correlation between the BET specific surface areas of the silicon oxide represented by SiOx (0<x<2), the natural graphite, and the artificial graphite is satisfied, the decrease in the service life of the secondary battery is ameliorated, rapid charging is possible, and the electrode adhesion is excellent.

In particular, the lithium secondary battery according to the present application is characterized by using silicon oxide represented by SiOx (0<x<2) among silicon-based active materials. Specifically, when compared with other silicon-based active materials (for example, Si/C), the lithium secondary battery according to the present application has the characteristics of improving electrode quality, that is, adhesion to the electrode when the active material as described above is used.

In an exemplary embodiment of the present application, the silicon oxide represented by SiOx (0<x<2) may be doped with magnesium metal or lithium metal.

The silicon oxide represented by SiOx (0<x<2) according to the present application may be used without being doped or may also be used while being doped as described above, and when the silicon oxide is doped, silicate may be formed in advance in the silicon oxide to reduce the irreversible capacity during initial charging, thereby exhibiting the effect of increasing the energy density of a cell.

According to an exemplary embodiment of the present application, the BET specific surface area of the silicon oxide represented by SiOx (0<x<2) is larger than the BET specific surface area of the natural graphite by 1 m²/g to 9 m²/g.

The BET specific surface area of the silicon oxide represented by SiOx (0<x<2) is larger than the BET specific surface area of the natural graphite by 1.2 m²/g or more, 1.5 m²/g or more, 1.7 m²/g or more, or 1.9 m²/g or more. The BET specific surface area of the silicon oxide represented by SiOx (0<x<2) is larger than the BET specific surface area of the natural graphite by 8.7 m²/g or less, 8.4 m²/g or less, 8.2 m²/g or less, or 8 m²/g or less.

According to an exemplary embodiment of the present application, the BET specific surface area of the silicon oxide represented by SiOx (0<x<2) is larger than the BET specific surface area of the artificial graphite by 2 m²/g to 10 m²/g.

The BET specific surface area of the silicon oxide represented by SiOx (0<x<2) is larger than the BET specific surface area of the artificial graphite by 2.2 m²/g or more, 2.5 m²/g or more, 2.7 m²/g or more, or 2.9 m²/g or more.

The BET specific surface area of the silicon oxide represented by SiOx (0<x<2) is larger than the BET specific surface area of the artificial graphite by 9.7 m²/g or less, 9.4 m²/g or less, 9.2 m²/g or less, or 9 m²/g or less.

According to an exemplary embodiment of the present application, the BET specific surface area of the natural graphite is larger than the BET specific surface area of the artificial graphite by 0.1 m²/g to 2 m²/g.

The BET specific surface area of the natural graphite is larger than the BET specific surface area of the artificial graphite by 0.2 m²/g or more or 0.3 m²/g or more. The BET specific surface area of the natural graphite is larger than the BET specific surface area of the artificial graphite by 1.9 m²/g or less, 1.8 m2/g or less, or 1.7 m²/g or less.

Natural graphite has a BET specific surface area value of 1.5 m²/g or more and 3.5 m²/g or less, which may improve the electrode adhesion. Artificial graphite and silicon oxide represented by SiOx (0<x<2) affect fast charging and service life performance, and have a BET specific surface area of 0.1 m²/g to 2.5 m²/g and 3 m²/g to 15 m²/g, respectively.

When the artificial graphite has a larger BET specific surface area than the natural graphite, a large amount of binder in the electrode may be consumed during the preparation of an electrode with the negative electrode composition, so that the adhesion of the electrode may deteriorate. In addition, when the BET specific surface area of silicon oxide represented by SiOx (0<x<2) is smaller than the BET specific surface area of natural graphite, it is difficult to intercalate and/or deintercalate lithium into silicon oxide represented by SiOx (0<x<2), so that the service life performance and rapid charging performance may deteriorate.

According to a further exemplary embodiment of the present application, the negative electrode composition includes graphite, and the graphite may include natural graphite and artificial graphite.

According to one example, the natural graphite may satisfy the relationship of specific surface area. Furthermore, more specifically, the natural graphite may be natural graphite that has a sphericity of 0.9 or more and satisfies the above conditions.

In the present specification, the sphericity may be a value obtained by dividing the circumference of a circle that has the same area as the projected image when a particle is projected by the perimeter length of the projected image, and specifically may be represented by the following Equation 1. The sphericity may be obtained from an SEM image, or may be measured using a particle image analyzer, such as a sysmex FPIA3000 manufactured by Malvern. Further, the crystal size can be confirmed through XRD analysis. Sphericity = the circumference of a circle that has the same area as the projected image when a particle is projected/the perimeter length of the projected image The natural graphite means graphite that is naturally occurring, and examples thereof include scaled graphite, scaly graphite, or soil graphite. The natural graphite has the advantages of being abundant, being low in price, having high theoretical capacity and compacted density, and being capable of implementing high output.

As the natural graphite, it is possible to select and apply natural graphite which is subjected to a method of confirming the particle shape through SEM and confirming the particle shape through a particle image analyzer, and then satisfies the sphericity.

According to one example, the artificial graphite may satisfy the relationship of the specific surface area. In addition, more specifically, the artificial graphite may be artificial graphite that has a sphericity of 0.9 or less and satisfies the above conditions.

As the artificial graphite, it is possible to select and apply artificial graphite which is subjected to a method of confirming the particle shape through SEM and confirming the particle shape through a particle image analyzer, and then satisfies the sphericity.

According to a further exemplary embodiment of the present application, the negative electrode conductive material may include single-walled carbon nanotubes (SWCNTs). The single-walled carbon nanotube (SWCNT) means a carbon structure in the form of a tube composed of a single carbon layer. When the conductive material in the negative electrode composition includes the single-walled carbon nanotubes (SWCNTs), the charge and discharge capacity and/or service life performance of the battery may be improved. Specifically, since the single-walled carbon nanotubes (SWCNTs) successfully connect a conductive path between particles, it is possible to prevent the loss of the conductive path caused by the swelling of the above-described silicon-based negative electrode active material. As a result, the service life performance of the battery may be improved when the single-walled carbon nanotubes (SWCNTs) are included.

In the present specification, the length of carbon nanotubes means the length of the major axis passing through the center of a monomer of the carbon nanotube, and the diameter of carbon nanotubes means the length of the minor axis passing through the center of the monomer and being perpendicular to the major axis.

The single-walled carbon nanotubes (SWCNTs) may have an average length of 0.1 µm to 50 µm, specifically 0.5 µm to 25 µm or 0.5 µm to 20 µm. More specifically, the average length may be 5 µm to 15 µm. The lower limit of the average length may be 0.1 µm, 0.5 µm, 1 µm, 2 µm, 3 µm, 4 µm, 5 µm, 6 µm, 7 µm or 8 µm, and the upper limit thereof may be 50 µm, 30 µm, 25 µm, 20 µm, 15 µm, 14 µm, 13 µm, 12 µm, 11 µm or 10 µm.

For the single-walled carbon nanotube (SWCNT), when a single-walled carbon nanotube satisfying the electrical conductivity, strength, and the above range is used with silicon oxide represented by SiOx (0<x<2) and graphite, which have the characteristics, it becomes easier to connect the conductive paths between the particles because the length of the carbon nanotubes as large as the distance between the negative electrode active material particles is secured, so that the electrical conductivity, strength and/or electrolytic solution retention property of the negative electrode may be improved. In contrast, when the length of the carbon nanotubes is short, there is a concern in that the electrical conductivity may deteriorate because it is difficult to efficiently form a conductive path, and when the length of the carbon nanotubes is excessively long, there is a concern in that the dispersibility may deteriorate.

The average length of the single-walled carbon nanotubes (SWCNTs) may be calculated from the average value of the results observed by SEM.

The single-walled carbon nanotubes (SWCNTs) may have an average diameter of 1 nm to 20 nm, specifically 1.5 nm to 15 nm. More specifically, the average diameter may be 1.5 nm to 5 nm. The lower limit of the average diameter may be 1 nm, 1.5 nm or 2 nm, and the upper limit thereof may be 20 nm, 18 nm, 16 nm, 14 nm, 12 nm, 10 nm, 8 nm, 6 nm or 4 nm.

Since single-walled carbon nanotubes (SWCNTs) satisfying the above range have flexible characteristics, there is an effect that the contact between negative electrode active material particles is not easily broken even when the single-walled carbon nanotubes are physically damaged. In contrast, when the diameter of the carbon nanotubes (SWCNTs) is excessively large, there is a concern in that the electrode density may be decreased, and when the diameter of the carbon nanotubes (SWCNTs) is excessively small, it is difficult to disperse the carbon nanotubes, so that there is a concern in that the preparation processability of a dispersion may deteriorate.

The average diameter of the single-walled carbon nanotubes (SWCNTs) may be calculated from the average value observed by TEM.

The single-walled carbon nanotubes may have a BET specific surface area of 200 m²/g to 2,000 m²/g, specifically 250 m²/g to 1,500 m²/g. When single-walled carbon nanotubes (SWCNTs) satisfying the above range are used, the single-walled carbon nanotubes are readily dispersed even though a small amount of conductive material is used, so that there is an effect capable of effectively connecting the particles.

The single-walled carbon nanotubes (SWCNTs) may be included in an amount of 0.01 parts by weight to 5 parts by weight, specifically, 0.01 parts by weight to 4 parts by weight, 0.01 parts by weight to 3 parts by weight, 0.01 parts by weight to 2 parts by weight, 0.01 parts by weight to 1 part by weight, or 0.05 parts by weight to 0.5 parts by weight, based on 100 parts by weight of the negative electrode composition.

When the above range is satisfied, there is an effect that the side reaction of the electrolytic solution caused by a high specific surface area may be minimized while facilitating the connection of the conductive paths between the silicon-based negative electrode active material particles including silicon oxide represented by SiOx (0<x<2) and graphite.

According to a further exemplary embodiment of the present application, the BET specific surface area values of the silicon oxide represented by SiOx (0<x<2), the natural graphite and the artificial graphite may be larger in the order of artificial graphite < natural graphite < silicon oxide represented by SiOx (0<x<2).

According to one example, the specific surface area is measured by the BET method, and may be specifically measured by degassing an object to be measured at 130°C for 2 hours using a BET measuring apparatus (BEL-SORP-mini, Nippon Bell), and performing N₂ adsorption/desorption at 77 K. That is, in the present specification, the BET specific surface area may mean a specific surface area of the particles themselves measured by the measurement method.

According to one example, the negative electrode conductive material may include single-walled carbon nanotubes (SWCNTs).

A negative electrode composition according to an exemplary embodiment of the present invention includes silicon oxide represented by SiOx (0<x<2), natural graphite, artificial graphite, and single-walled carbon nanotubes (SWCNTs) and can satisfy the correlation between the BET specific surface area of silicon oxide represented by SiOx (0<x<2), the natural graphite, and the artificial graphite, which have the above-described contents, in using a silicon-based active material, which is a high-capacity material, to manufacture a high-capacity battery, thereby ameliorating the decrease in the service life of existing secondary batteries, enabling rapid charging, and having excellent electrode adhesion characteristics.

In addition, the conductive path between the negative electrode active material particles can be improved together using a silicon oxide represented by SiOx (0<x<2), graphite, and single-walled carbon nanotubes (SWCNTs) as a conductive material included in the negative electrode composition having the above-described content, thereby improving the capacity, efficiency, and service life performance of the battery.

In an exemplary embodiment of the present application, provided is a negative electrode composition in which the pore volumes (total pore V.) of the silicon oxide represented by SiOx (0<x<2), the natural graphite, and the artificial graphite are larger in the order of artificial graphite ≤ natural graphite ≤ silicon oxide represented by SiOx (0<x<2).

According to a further exemplary embodiment of the present application, the silicon oxide represented by SiOx (0<x<2), natural graphite and artificial graphite in the negative electrode composition may include pores.

According to one example, the volume of pores may mean the volume of the pores of the particles themselves, and may be measured by an equation according to the absorption/desorption isotherm method by a nitrogen adsorption method. Specifically, a N₂ adsorption/desorption isotherm graph was derived using the BELSORP-mini ± model from BEL Japan Co. Ltd., and then, the volume at the point where P/P₀ (close to 1) was the highest in absorption was used as the representative volume. The absorption/desorption isotherm method may be used, and in the plot of the measured values, the X-axis is pressure (P/P₀), and the Y-axis is Va/cm³ (STP) g⁻¹.

According to one example, the silicon oxide represented by SiOx (0<x<2) may have a pore volume (total pore V.) of 7 cm³/g or more, the natural graphite may have a pore volume (total pore V.) of 3 cm³/g to 7 cm³/g, and the artificial graphite may have a pore volume (total pore V.) of 3 cm³/g or less.

The pore volume of the silicon oxide represented by SiOx (0<x<2) may be larger than the pore volume of the natural graphite by 1 cm³/g to 8 cm³/g.

The pore volume of the silicon oxide represented by SiOx (0<x<2) may be the same as the pore volume of the natural graphite.

The pore volume of the silicon oxide represented by SiOx (0<x<2) is larger than the pore volume of the artificial graphite by 4 cm³/g to 11 cm³/g .

The pore volume of the natural graphite may be larger than the pore volume of the artificial graphite by 1 cm³/g to 6 cm³/g.

The pore volume of the natural graphite may be the same as the pore volume of the artificial graphite.

When the pore volume (total pore V.) of the silicon oxide represented by SiOx (0<x<2), the natural graphite and the artificial graphite satisfies the above range, the decrease in the service life of the secondary battery is ameliorated, and the secondary battery can be rapidly charged and may have excellent electrode adhesion characteristics.

In an exemplary embodiment of the present application, provided is a negative electrode composition in which the number of pores (pore intensity) having a size of 2 nm or more and 200 nm or less is larger in the order of artificial graphite ≤ natural graphite ≤ silicon oxide represented by SiOx (0<x<2).

According to one example, the size of pores may mean the size of the pores of the particles themselves, and may be measured by an equation according to the Barrett-Joyer-Halenda (BJH) method by a nitrogen adsorption method. Specifically, a pore area according to the size of pores was derived using a BELSORP-mini II model manufactured by BEL Japan, Inc., and then the size of pores showing the largest pore area was employed as a representative pore size. The BJH method may be used, and in the plot of the measured values, the X-axis is the diameter (Dp/nm) of the pores, and the Y-axis is dVp/dDp (cm³g⁻¹nm⁻¹).

When the above range is satisfied, the decrease in the service life of the secondary battery is ameliorated, and the secondary battery can be rapidly charged and may have excellent electrode adhesion characteristics.

In an exemplary embodiment of the present application, provided is a negative electrode composition in which the natural graphite has a BET specific surface area of 1.5 m²/g or more and 3.5 m²/g or less, and the artificial graphite has a BET specific surface area of 0.1 m²/g or more and 2.5 m²/g or less.

The natural graphite may have a BET specific surface area of 1.5 m²/g or more and 3.5 m²/g or less, 1.5 m²/g or more and 3.3 m²/g or less, 1.5 m²/g or more and 3 m²/g or less, 1.5 m²/g or more and 2.8 m²/g or less, or 1.5 m²/g or more and 2.5 m²/g or less.

The artificial graphite may have a BET specific surface area of 0.1 m²/g or more and 2.2 m²/g or less, 0.1 m²/g or more and 2 m²/g or less, 0.1 m²/g or more and 1.8 m²/g or less, 0.1 m²/g or more and 1.5 m²/g or less, or 0.3 m²/g or more and 2.5 m²/g or less.

When the natural graphite and the artificial graphite satisfy the above BET specific surface area ranges, the negative electrode composition includes two types of graphite having different specific surface areas other than the silicon oxide represented by SiOx (0<x<2), and thus may ameliorate the problem of the decrease in the service life of the negative electrode and secondary battery which may occur due to a large volume change of silicon-based particles while having excellent output characteristics at a high C-rate and an increase in battery capacity by using the silicon oxide represented by SiOx (0<x<2) as the negative electrode active material.

Natural graphite may improve electrode adhesion within the above BET specific surface area range, and artificial graphite may affect rapid charging and service life performance within the above BET specific surface area range. Furthermore, when the artificial graphite has a larger BET specific surface area than the natural graphite, a large amount of binder in the electrode may be consumed during the preparation of an electrode with the negative electrode composition, so that the adhesion of the electrode may deteriorate.

In an exemplary embodiment of the present application, provided is a negative electrode composition in which the negative electrode conductive material includes single-walled carbon nanotubes (SWCNTs), the silicon oxide represented by SiOx (0<x<2) is included in an amount of 0.5 parts by weight to 50 parts by weight; the graphite is included in an amount of 45 parts by weight to 99 parts by weight; and the single-walled carbon nanotubes (SWCNTs) are included in an amount of 0.01 parts by weight to 5 parts by weight, based on 100 parts by weight of the total content of the silicon oxide represented by SiOx (0<x<2), the graphite, and the single-walled carbon nanotubes in the negative electrode composition, and the natural graphite is included in an amount of 10 parts by weight to 70 parts by weight; and the artificial graphite is included in an amount of 30 parts by weight to 90 parts by weight based on 100 parts by weight of the graphite.

According to a further exemplary embodiment of the present application, the negative electrode composition includes silicon oxide represented by SiOx (0<x<2); graphite and a negative electrode conductive material, the graphite includes natural graphite and artificial graphite, and the negative electrode conductive material includes single-walled carbon nanotubes (SWCNTs).

According to a further exemplary embodiment of the present application, silicon oxide represented by SiOx (0<x<2) may be included in an amount of 0.5 parts by weight to 50 parts by weight; graphite may be included in an amount of 45 parts by weight to 99 parts by weight; and single-walled carbon nanotubes (SWCNTs) may be included in an amount of 0.01 parts by weight to 5 parts by weight, based on 100 parts by weight of the total content of the silicon oxide represented by SiOx (0<x<2), the graphite, and the single-walled carbon nanotubes in the negative electrode composition.

According to an example, silicon oxide represented by SiOx (0<x<2) may be included in an amount of 1 part by weight to 40 parts by weight, 2 parts by weight to 30 parts by weight, 3 parts by weight to 20 parts by weight, 4 parts by weight to 10 parts by weight, or 5 parts by weight to 10 parts by weight, based on 100 parts by weight of the total content of the silicon oxide represented by SiOx (0<x<2), the graphite, and the single-walled carbon nanotubes in the negative electrode composition. The graphite may be included in an amount of 50 parts by weight to 99 parts by weight, 55 parts by weight to 99 parts by weight, 60 parts by weight to 99 parts by weight, 65 parts by weight to 99 parts by weight, 70 parts by weight to 99 parts by weight, or 75 parts by weight to 95 parts by weight. The single-walled carbon nanotubes (SWCNTs) may be included in an amount of 0.01 parts by weight to 4 parts by weight, 0.01 parts by weight to 3 parts by weight, 0.01 parts by weight to 2 parts by weight, 0.01 parts by weight to 1 part by weight, or 0.05 parts by weight to 0.5 parts by weight.

According to a further exemplary embodiment of the present application, the natural graphite may be included in an amount of 10 to 70 parts by weight; and the artificial graphite may be included in an amount of 30 to 90 parts by weight, based on 100 parts by weight of the graphite.

According to one example, the natural graphite may be included in an amount of 11 to 68 parts by weight; and the artificial graphite may be included in an amount of 32 to 89 parts by weight, based on 100 parts by weight of the graphite.

Within the content range of the negative electrode composition, particularly when the content range of silicon oxide represented by SiOx (0<x<2) is satisfied, the capacity characteristics may be improved, and when the content range of the graphite is satisfied, the rapid charging performance and the negative electrode adhesion may be improved, and when the content range of the single-walled carbon nanotubes (SWCNTs) is satisfied, the efficiency and service life performance of the battery may be improved. Therefore, the decrease in the service life of the secondary battery is ameliorated and the number of points where charging and discharging are possible is increased, so that it is possible to have excellent output characteristics at a high C-rate.

In an exemplary embodiment of the present application, a negative electrode composition further including a binder is provided.

The binder may serve to improve the bonding between negative electrode active material particles and the adhesion between the negative electrode active material particles and the negative electrode current collector. The binder may be a negative electrode binder. As the negative electrode binder, those known in the art may be used, and non-limiting examples thereof may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The binder may be included in an amount of 10% or less, and preferably 1% to 5%, based on 100 parts by weight of the negative electrode composition. For example, the binder may be included in an amount of 9% or less, 8% or less, 7% or less, 6% or less, or 5% or less based on 100 parts by weight of the negative electrode composition. The binder may be included in an amount of 0.5% or more or 1% or more based on 100 parts by weight of the negative electrode composition.

### <Method for preparing negative electrode composition>

An exemplary embodiment of the present application provides a method for preparing a negative electrode composition, the method including: mixing a negative electrode conductive material with water to form a first mixture; and mixing the mixture with a silicon-based active material and graphite to form a second mixture, in which the graphite includes natural graphite and artificial graphite, the silicon-based active material includes silicon oxide represented by SiOx (0<x<2), and the BET specific surface area values of the silicon oxide represented by SiOx (0<x<2), the natural graphite, and above artificial graphite are larger in the order of artificial graphite < natural graphite < silicon oxide represented by SiOx (0<x<2).

According to a further exemplary embodiment of the present application, the method for preparing the negative electrode composition may include mixing the silicon oxide represented by SiOx (0<x<2) and graphite together with the negative conductive material.

In an exemplary embodiment of the present application, provided is a method for preparing a negative electrode composition in which the negative electrode conductive material includes single-walled carbon nanotubes (SWCNTs), the silicon oxide represented by SiOx (0<x<2) is included in an amount of 0.5 to 50 parts by weight; the graphite is included in an amount of 45 to 99 parts by weight; and the single-walled carbon nanotubes (SWCNTs) are included in an amount of 0.01 to 5 parts by weight, based on 100 parts by weight of the total content of the silicon oxide represented by SiOx (0<x<2), the graphite, and the single-walled carbon nanotubes in the negative electrode composition, and the natural graphite is included in an amount of 10 to 70 parts by weight; and the artificial graphite is included in an amount of 30 to 90 parts by weight based on 100 parts by weight of the graphite.

In an exemplary embodiment of the present application, the BET specific surface area of the silicon oxide represented by SiOx (0<x<2) is larger than the BET specific surface area of the natural graphite by 1 m²/g to 9 m²/g, the BET specific surface area of the silicon oxide represented by SiOx (0<x<2) is larger than the BET specific surface area of the artificial graphite by 2 m²/g to 10 m²/g, and the BET specific surface area of the natural graphite is larger than the BET specific surface area of the artificial graphite by 0.1 m²/g to 2 m²/g.

In an exemplary embodiment of the present application, the silicon oxide represented by SiOx (0<x<2), the natural graphite and the artificial graphite have the same BET specific surface area and pore volume as those described above for the negative electrode composition.

### <Negative electrode>

An exemplary embodiment of the present application provides a negative electrode for a lithium secondary battery, including: a current collector; and a negative electrode active material layer including the above-described negative electrode composition formed on one or both surfaces of the current collector.

According to a further exemplary embodiment of the present application, the current collector is a negative electrode current collector, and is not particularly limited as long as the current collector has conductivity without causing a chemical change in the battery. For example, as the current collector, it is possible to use copper, stainless steel, aluminum, nickel, titanium, fired carbon, or aluminum or stainless steel whose surface is treated with carbon, nickel, titanium, silver, and the like. Specifically, a transition metal, such as copper or nickel which adsorbs carbon well, may be used as a current collector. Although the current collector may have a thickness of 1 µm to 500 µm, the thickness of the current collector is not limited thereto.

According to a further exemplary embodiment of the present application, a negative electrode active material layer including a negative electrode composition according to the above-described exemplary embodiment may be formed on one or both surfaces of the current collector. According to an example, the negative electrode active material layer may have a thickness of 20 µm or more and 500 µm or less.

According to a further exemplary embodiment of the present application, the negative electrode for a lithium secondary battery may be manufactured by a typical method for manufacturing a negative electrode. The silicon oxide represented by SiOx (0<x<2) and graphite may be negative electrode active materials. Specifically, the negative electrode for a lithium secondary battery may be manufactured by applying a negative electrode composition including the aforementioned negative electrode active material, a negative electrode conductive material, and optionally a binder onto a current collector, and then drying and rolling the current collector. In this case, the types and contents of the negative electrode active material, negative electrode conductive material, and binder are as described above.

The solvent may be a solvent commonly used in the art, examples thereof include dimethyl sulfoxide (DMSO), isopropyl alcohol, N-methylpyrrolidone (NMP), acetone, water, or the like, and among them, any one thereof or a mixture of two or more thereof may be used. In consideration of the application thickness and preparation yield of the slurry, the amount of solvent used is sufficient enough as long as the solvent in the amount dissolves or disperses the negative electrode active material, negative electrode conductive material, and binder, and has a viscosity capable of exhibiting excellent thickness uniformity during subsequent application for manufacturing the negative electrode. Alternatively, by another method, the negative electrode may be manufactured by casting the negative electrode composition on a separate support and then laminating a film obtained by performing peel-off from the support on a current collector.

### <Lithium Secondary Battery>

An exemplary embodiment of the present application provides a lithium secondary battery including: a positive electrode; the negative electrode for a lithium secondary battery according to the above-described exemplary embodiment; and a separator disposed between the positive electrode and the negative electrode.

According to a further exemplary embodiment of the present application, the negative electrode is the same as the negative electrode according to the above-described exemplary embodiment. Since the negative electrode has been described in detail, a specific description thereof will be omitted.

According to a further exemplary embodiment of the present application, the positive electrode includes a positive electrode current collector, and a positive electrode active material layer including a positive electrode composition formed on the positive electrode current collector.

According to one example, the positive electrode may include a positive electrode current collector and a positive electrode active material layer formed on the positive electrode current collector and including the positive electrode composition. The positive electrode composition may include a positive electrode active material.

In the positive electrode, the positive electrode current collector layer is not particularly limited as long as the positive electrode current collector layer has conductivity without causing a chemical change in the battery, and for example, it is possible to use stainless steel, aluminum, nickel, titanium, fired carbon, or aluminum or stainless steel whose surface is treated with carbon, nickel, titanium, silver, and the like. Further, the positive electrode current collector may typically have a thickness of 3 to 500 µm, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

According to one example, the negative electrode active material layer may have a thickness of 20 µm or more and 500 µm or less, and the positive electrode active material layer may have a thickness which is 90% to 110%, for example, 95% to 105% of the thickness of the negative electrode active material layer. In addition, their thicknesses may be the same.

The positive electrode active material may be a typically used positive electrode active material. Specifically, the positive electrode active material includes: a layered compound such as lithium cobalt oxide (LiCoO₂) and lithium nickel oxide (LiNiO₂) or a compound substituted with one or more transition metals; a lithium iron oxide such as LiFe₃O₄; a lithium manganese oxide such as chemical formula Li_{1+c},Mn_{2-c1}O₄ (0≤c1≤0. 33), LiMnO₃, LiMn₂O₃, and LiMnO₂; a lithium copper oxide (Li₂CuO₂); a vanadium oxide such as LiV₃O₈, V₂O₅, and Cu₂V₂O₇; a Ni site type lithium nickel oxide expressed as chemical formula LiNi_{1-c2}M_{c2}O₂ (here, M is at least one selected from the group consisting of Co, Mn, Al, Cu, Fe, Mg, B and Ga, and c2 satisfies 0.01≤c2≤0.3); a lithium manganese composite oxide expressed as chemical formula LiMn_{2-c3}M_{c3}O₂ (here, M is at least any one selected from the group consisting of Co, Ni, Fe, Cr, Zn and Ta, and c3 satisfies 0.01≤c3≤0.1) or Li₂Mn₃MO₈ (here, M is at least any one selected from the group consisting of Fe, Co, Ni, Cu and Zn.); LiMn₂O₄ in which Li of the chemical formula is partially substituted with an alkaline earth metal ion, and the like, but is not limited thereto. The positive electrode may be Li-metal.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

And, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

According to a further exemplary embodiment of the present application, the lithium secondary battery may include a separator provided between the positive electrode and the negative electrode.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolytic solution as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

According to an exemplary embodiment of the present application, the lithium secondary battery may include an electrolytic solution.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and when the cyclic carbonate is mixed with a linear carbonate of a low viscosity and low permittivity such as dimethyl carbonate and diethyl carbonate in an appropriate ratio, it is able to prepare an electrolyte having a high electric conductivity, therefore such a combined use is more preferable.

As the metal salt, a lithium salt may be used, the lithium salt is a material which is easily dissolved in the non-aqueous electrolytic solution, and for example, as an anion of the lithium salt, it is possible to use one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

In an exemplary embodiment of the present application, the lithium secondary battery is a cylindrical battery.

According to one example, the cylindrical battery means that the form of the battery itself, which includes an assembly including a positive electrode, a negative electrode, a separator and an electrolyte, is cylindrical, and specifically, may be composed of a cylindrical can, a battery assembly provided inside the cylindrical can, and a top cap.

In an exemplary embodiment of the present application, a battery module including the lithium secondary battery is provided.

In an exemplary embodiment of the present application, a battery pack including the battery module according to the above-described exemplary embodiment is provided.

A further exemplary embodiment of the present invention provides a battery module including the above-described cylindrical battery as a unit cell and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

Since the lithium secondary battery according to exemplary embodiments of the present invention stably exhibits excellent discharge capacity, output characteristics, and cycle performance, the lithium secondary battery may be used as a power source for portable devices such as mobile phones, notebook-sized computers and digital cameras, and medium-and-large sized devices selected from the group consisting of electric vehicles, hybrid electric vehicles, plug-in hybrid electric vehicles, and power storage systems. For example, the battery module or battery pack may be used as a power source for one or more medium-and-large sized devices of a power tool; an electric vehicle including an electric vehicle (EV), a hybrid electric vehicle and a plug-in hybrid electric vehicle (PHEV); and a power storage system.

### [Mode for Invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

### <Examples and Comparative Examples>

### <Example 1>

### Manufacture of negative electrode

A negative electrode composition including 10 parts by weight of silicon oxide represented by SiOx (0<x<2), 89.5 parts by weight of graphite (artificial graphite:natural graphite = 89:11 weight ratio), and 0.5 parts by weight of single-walled carbon nanotubes based on 100 parts by weight of the total content of silicon oxide represented by SiOx (0<x<2); graphite, and a negative electrode conductive material in the negative electrode composition, including 1.15 parts by weight of styrenebutadiene rubber (SBR) and 1 part by weight of carboxymethyl cellulose (CMC) as binders, and further including a CNT pre-dispersion including 0.09 parts by weight of a dispersant and 0.06 parts by weight of single-walled CNTs, based on 100 parts by weight of the negative electrode composition is prepared. In this case, the composition was prepared to have a BET specific surface area of artificial graphite, natural graphite, and silicon oxide of 0.8 m²/g, 1.8 m²/g, and 7 m²/g, respectively.

That is, after the silicon oxide, graphite, and carboxymethyl cellulose (CMC) and styrene-butadiene rubber (SBR) as binders were added to a dispersion of single-walled carbon nantotubes using distilled water as a dispersion medium and carboxymethyl cellulose (CMC) as a dispersant, the resulting mixture was stirred, and then a negative electrode composition was prepared by adding distilled water thereto (solid content = 50 parts by weight).

The negative electrode composition was applied to a copper (Cu) metal thin film which is a negative electrode current collector having a thickness of 15 µm and dried. In this case, the temperature of the circulating air was 60°C. Subsequently, a negative electrode in which the negative electrode active material layer was disposed on the negative electrode current collector was prepared by roll pressing the negative electrode current collector and drying the negative electrode current collector in a vacuum oven at 130°C for 12 hours.

In this case, in the CMCs, the weight of the CMC added as the binder : the weight of the CMC added as the dispersant = 1.14 : 0.06. In the negative electrode active material layer, the single-walled carbon nanotube monomers had an average length of 10 µm, and an average diameter of 2 nm.

### <Examples 2 to 14>

A negative electrode was prepared in the same manner as in Example 1, except that the BET specific surface areas of the artificial graphite, natural graphite, and silicon oxide represented by SiOx (0<x<2) included in the negative electrode composition, and each weight ratio based on a total of 100 parts by weight of the total content of the silicon oxide represented by SiOx (0<x<2), graphite, and single-walled carbon nanotubes in the negative electrode composition are shown in the following Table 1.

### <Comparative Examples 1 to 5>

A negative electrode was prepared in the same manner as in Example 1, except that the BET specific surface areas of the artificial graphite, natural graphite, and silicon oxide included in the negative electrode composition, and each weight ratio based on a total of 100 parts by weight of the total content of the silicon oxide, graphite, and single-walled carbon nanotubes in the negative electrode composition are shown in the following Table 1.

The negative electrodes prepared in the Examples and the Comparative Examples are shown in the following Table 1.

**[Table 1]**

| No. | Specific surface area (m²/g) | | | Composition ratio (wt.%) (based on 100 parts by weight of the total content of silicon-based active material; graphite, and negative electrode conductive material) | | | |
|---|---|---|---|---|---|---|---|
| | Artificial Graphite | Natural Graphite | Silicon oxide represented by SiOx (0<x<2) | Natural Graphite | Artificial Graphite | SiOx (0<x<2) | SWCNT Conductive material |
| Example 1 | 0.8 | 1.8 | 7 | 10.5 | 79 | 10 | 0.5 |
| Example 2 | 0.3 | 1.8 | 7 | 10.5 | 79 | 10 | 0.5 |
| Example 3 | 1.5 | 1.8 | 7 | 10.5 | 79 | 10 | 0.5 |
| Example 4 | 0.8 | 1.5 | 7 | 10.5 | 79 | 10 | 0.5 |
| Example 5 | 0.8 | 2.5 | 7 | 10.5 | 79 | 10 | 0.5 |
| Example 6 | 0.8 | 1.8 | 3 | 10.5 | 79 | 10 | 0.5 |
| Example 7 | 0.8 | 1.8 | 11.5 | 10.5 | 79 | 10 | 0.5 |
| Example 8 | 0.8 | 1.8 | 7 | 60.5 | 29 | 10 | 0.5 |
| Example 9 | 0.8 | 1.8 | 7 | 15.5 | 79 | 5 | 0.5 |
| Example 10 | 0.8 | 1.8 | 7 | 10.95 | 79 | 10 | 0.05 |
| Example 11 | 0.8 | 1.8 | 7 | 5.5 | 84 | 10 | 0.5 |
| Example 12 | 0.8 | 1.8 | 7 | 0 | 89.5 | 10 | 0.5 |
| Example 13 | 0.8 | 6.5 | 7 | 10.5 | 79 | 10 | 0.5 |
| Example 14 | 0.8 | 1.8 | 2.5 | 10.5 | 79 | 10 | 0.5 |
| Comparative Example 1 | 2.0 | 1.5 | 7 | 10.5 | 79 | 10 | 0.5 |
| Comparative Example 2 | 2.0 | 3.6 | 3 | 10.5 | 79 | 10 | 0.5 |
| Comparative Example 3 | 4.0 | 3.6 | 3 | 10.5 | 79 | 10 | 0.5 |
| Comparative Example 4 | 0.8 | 1.8 | - | 20.5 | 79 | 0 | 0.5 |
| Comparative Example 5 | 0.8 | 1.8 | 7 | 10.5 | 79 | 10 | 0 |

The specific surface area was measured by degassing gas at 130°C for 2 hours using a BET measuring apparatus (BEL-SORP-mini, Nippon Bell), and performing N₂ adsorption/desorption at 77 K.

### <Experimental Examples>

Lithium secondary batteries including the negative electrodes in the Examples and the Comparative Examples were manufactured.

### Evaluation of service life (capacity retention rate) characteristics

The capacity retention rate was evaluated by charging and discharging the manufactured battery, and is shown in the following Table 2.

For the 1st and 2nd cycles, the battery was charged and discharged at 0.1 C, and from the 3rd cycle, the battery was charged and discharged at 0.5 C. The 300th cycle was completed in a charged state (with lithium contained in the negative electrode).
Charging conditions: CC (constant current)/CV (constant voltage) (4.25 V/0.05 C current cut-off)
Discharging conditions: CC (constant current) conditions 2.5V

The capacity retention rate was each derived by the following calculation. Capacity retention rate (%) = (100 times discharge capacity / 1 time discharge capacity)×100

The following Table 2 shows the values of the energy density (based on Example 1, %) and the capacity retention rate (300 cycles, %) of Examples 1 to 14 and Comparative Examples 1 to 5.

### Li-plating time point evaluation

A lithium (Li) metal thin film obtained by cutting a Li foil into a circle of 1.4875 cm² was used as a positive electrode. A porous polyethylene separator was interposed between the positive electrode and the negative electrode, and an electrolyte solution in which vinylene carbonate was dissolved in 0.5 parts by weight in a mixed solvent of methyl ethyl carbonate (EMC) and ethylene carbonate (EC) at a mixed volume ratio of 7 : 3, and LiPF₆ having a concentration of 1 M was dissolved was injected thereinto to prepare a lithium coin half-cell.

After one charge-discharge cycle was completed, the Li-plating time point was measured under charging conditions of 1.8 C.
Charging conditions: CC (constant current)/CV (constant voltage) (5 mV/0.005 C current cut-off)
Discharging conditions: CC (constant current) conditions 1.5 V

### Evaluation of electrode adhesion

For each of the manufactured negative electrodes, the negative electrode was punched out into a size of 20 mm x 150 mm and fixed to the center of a slide glass using tape, and then a peel strength at 180 degrees was measured while peeling off a negative electrode current collector using a UTM. The peel strength of five or more pieces was measured and set as an average value. The results are shown in the following Table 2.

**[Table 2]**

| | Service life (300cycle %) | Li plating time point (3C, SOC %) | Electrode adhesion (gf cm) |
|---|---|---|---|
| Example 1 | 94 | 85 | 54 |
| Example 2 | 95 | 84 | 54 |
| Example 3 | 93 | 84 | 53 |
| Example 4 | 94 | 85 | 54 |
| Example 5 | 92 | 85 | 54 |
| Example 6 | 94 | 85 | 53 |
| Example 7 | 91 | 84 | 54 |
| Example 8 | 92 | 82 | 54 |
| Example 9 | 95 | 83 | 55 |
| Example 10 | 93 | 85 | 54 |
| Example 11 | 92 | 85 | 49 |
| Example 12 | 94 | 85 | 54 |
| Example 13 | 92 | 84 | 55 |
| Example 14 | 92 | 85 | 53 |
| Comparative Example 1 | 81 | 78 | 36 |
| Comparative Example 2 | 78 | 67 | 36 |
| Comparative Example 3 | 80 | 78 | 59 |
| Comparative Example 4 | 76 | 68 | 55 |
| Comparative Example 5 | 72 | 81 | 51 |

The negative electrode composition according to the present invention is characterized in that the negative electrode composition includes a silicon-based active material; graphite, and a negative electrode conductive material, the silicon-based active material comprises silicon oxide represented by SiOx (0<x<2), the graphite includes natural graphite and artificial graphite, and the BET specific surface area values of the silicon oxide represented by SiOx (0<x<2), the natural graphite, and the artificial graphite are larger in the order of artificial graphite < natural graphite < silicon oxide represented by SiOx (0<x<2). The negative electrode composition can satisfy the correlation between the BET specific surface area of silicon oxide represented by SiOx (0<x<2), the natural graphite, and the artificial graphite in using a silicon-based active material, which is a high-capacity material, to manufacture a high-capacity battery, thereby ameliorating the decrease in the service life of existing secondary batteries, enabling rapid charging, and having excellent electrode adhesion characteristics. In particular, the negative electrode composition of the present invention satisfies the correlation between the BET specific surface area of artificial graphite and natural graphite as well as the BET specific surface area of SiO in order to manufacture a high-capacity battery, and may implement an optimal battery performance at an "optimum point" that controls side reactions from an electrochemical perspective. In addition, by using silicon oxide represented by SiOx (0<x<2), graphite, and single-walled carbon nanotubes (SWCNTs) as a conductive material included in the above-described negative electrode composition, the conductive path between the negative electrode active material particles can be improved, thereby improving the capacity, efficiency, and service life performance of the battery.

Natural graphite has a BET specific surface area value of 1.5 m²/g or more and 3.5 m²/g or less, which may improve the electrode adhesion. Artificial graphite and silicon oxide represented by SiOx (0<x<2) affect fast charging and service life performance, and have a BET specific surface area of 0.1 m²/g to 2.5 m²/g and 3 m²/g to 15 m²/g, respectively.

When the artificial graphite has a larger BET specific surface area than the natural graphite, a large amount of binder in the electrode may be consumed during the preparation of an electrode with the negative electrode composition, so that the adhesion of the electrode may deteriorate. In addition, when the BET specific surface area of silicon oxide is smaller than the BET specific surface area of natural graphite, it is difficult to intercalate and/or deintercalate lithium into silicon oxide represented by SiOx (0<x<2), so that the service life performance and rapid charging performance may deteriorate.

In Examples 1 to 14, negative electrode compositions which satisfy a specific surface area ratio were used, and it can be confirmed that the service life performance, rapid charging, and electrode adhesion are all excellent.

In contrast, Comparative Example 1 does not satisfy the specific surface area ratio of the negative electrode composition used in the present invention, and since artificial graphite has a larger BET specific surface area value than natural graphite, a large amount of binder in the electrode is consumed during the manufacture of an electrode using the negative electrode composition, so that the electrode adhesion may deteriorate, and thus, the service life performance may deteriorate.

Comparative Example 2 does not satisfy the specific surface area ratio of the negative electrode composition used in the present invention, and since the BET specific surface area of silicon oxide represented by SiOx (0<x<2) is smaller than the BET specific surface area of natural graphite, it is difficult to intercalate and/or deintercalate lithium in silicon oxide, so that the service life performance and rapid charging performance may deteriorate.

Comparative Example 3 does not satisfy the specific surface area ratio of the negative electrode composition used in the present invention, and in particular corresponds to a case where the relationship of the BET specific surface area of the present invention is reversed. Similarly, in this case, it is difficult to intercalate and/or deintercalate lithium into the negative electrode, so that the service life performance and rapid charging performance may deteriorate.

Comparative Example 4 corresponds to a case where silicon oxide represented by SiOx (0<x<2) is not used. In this case, as the thickness of the electrode increases, the rapid charging performance deteriorates, and a relatively high C-rate cycle evaluation of 0.5 C/0.5 C was also performed, and in this case, it could be confirmed that due to the deterioration in rapid charging performance, the service life performance, which can be considered to be a cumulative concept, also deteriorates.

Comparative Example 5 corresponds to a case where a negative electrode conductive material was not used for reference. In particular, the case where the Examples and the Comparative Examples are compared corresponds to the case where SWCNTs are not included as a negative electrode conductive material. The negative electrode of the present application requires a negative electrode conductive material such as long SWCNTs to secure a conductive path due to the silicon-based material which is a non-conductor, but it could be confirmed that the service life performance deteriorates because Comparative Example 5 does not include a material capable of securing the corresponding conductive path.

## Claims

1. A negative electrode composition comprising: a silicon-based active material; graphite and a negative electrode conductive material,
wherein the graphite comprises natural graphite and artificial graphite,
the silicon-based active material comprises silicon oxide represented by SiOx (0<x<2), and
the BET specific surface area values of the silicon oxide represented by SiOx (0<x<2), the natural graphite and the artificial graphite are larger in the order of artificial graphite < natural graphite < silicon oxide represented by SiOx (0<x<2).

2. The negative electrode composition of claim 1,
wherein the BET specific surface area of the silicon oxide represented by SiOx (0<x<2) is larger than the BET specific surface area of the natural graphite by 1 m²/g to 9 m²/g.

3. The lithium secondary battery of claim 1, wherein the silicon oxide represented by SiOx (0<x<2) is doped with magnesium metal or lithium metal.

4. The negative electrode composition of claim 1,
wherein the BET specific surface area of the silicon oxide represented by SiOx (0<x<2) is larger than the BET specific surface area of the artificial graphite by 2 m²/g to 10 m²/g.

5. The negative electrode composition of claim 1, wherein the BET specific surface area of the natural graphite is larger than the BET specific surface area of the artificial graphite by 0.1 m²/g to 2 m²/g.

6. The negative electrode composition of claim 1, wherein the pore volumes (total pore V.) of the silicon oxide represented by SiOx (0<x<2), the natural graphite, and the artificial graphite are larger in the order of artificial graphite ≤ natural graphite ≤ silicon oxide represented by SiOx (0<x<2).

7. The negative electrode composition of claim 1, wherein the natural graphite has a BET specific surface area of 1.5 m²/g or more and 3.5 m²/g or less, and the artificial graphite has a BET specific surface area of 0.1 m²/g or more and 2.5 m²/g or less.

8. The negative electrode composition of claim 1, wherein the negative electrode conductive material comprises single-walled carbon nanotubes (SWCNTs),
silicon oxide represented by SiOx (0<x<2) is comprised in an amount of 0.5 parts by weight to 50 parts by weight; graphite is comprised in an amount of 45 parts by weight to 99 parts by weight; and single-walled carbon nanotubes (SWCNTs) are comprised in an amount of 0.01 parts by weight to 5 parts by weight, based on 100 parts by weight of the total content of the silicon oxide represented by SiOx (0<x<2), the graphite, and the single-walled carbon nanotubes in the negative electrode composition, and
the natural graphite is comprised in an amount of 10 parts by weight to 70 parts by weight; and the artificial graphite is comprised in an amount of 30 parts by weight to 90 parts by weight, based on 100 parts by weight of the graphite.

9. The negative electrode composition of claim 1, further comprising a binder.

10. A method for preparing a negative electrode composition, the method comprising:
mixing a negative electrode conductive material with water to form a first mixture; and
mixing the mixture with a silicon-based active material and graphite to form a second mixture,
wherein the graphite comprises natural graphite and artificial graphite,
the silicon-based active material comprises silicon oxide represented by SiOx (0<x<2), and
the BET specific surface area values of the silicon oxide represented by SiOx (0<x<2), the natural graphite and the artificial graphite are larger in the order of artificial graphite < natural graphite < silicon oxide represented by SiOx (0<x<2).

11. The method of claim 10, wherein the negative electrode conductive material comprises single-walled carbon nanotubes (SWCNTs),
silicon oxide represented by SiOx (0<x<2) is comprised in an amount of 0.5 parts by weight to 50 parts by weight; graphite is comprised in an amount of 45 parts by weight to 99 parts by weight; and single-walled carbon nanotubes (SWCNTs) are comprised in an amount of 0.01 parts by weight to 5 parts by weight, based on 100 parts by weight of the total content of the silicon oxide represented by SiOx (0<x<2), the graphite, and the single-walled carbon nanotubes in the negative electrode composition, and
the natural graphite is comprised in an amount of 10 parts by weight to 70 parts by weight; and the artificial graphite is comprised in an amount of 30 parts by weight to 90 parts by weight, based on 100 parts by weight of the graphite.

12. The method of claim 10, wherein the BET specific surface area of the silicon oxide represented by SiOx (0<x<2) is larger than the BET specific surface area of the natural graphite by 1 m²/g to 9 m²/g.

13. The method of claim 10, wherein the BET specific surface area of the silicon oxide represented by SiOx (0<x<2) is larger than the BET specific surface area of the artificial graphite by 2 m²/g to 10 m²/g.

14. The method of claim 10, wherein the BET specific surface area of the natural graphite is larger than the BET specific surface area of the artificial graphite by 0.1 m²/g to 2 m²/g.

15. A negative electrode for a lithium secondary battery, comprising:
a current collector; and
a negative electrode active material layer comprising the negative electrode composition according to any one of claims 1 to 9 formed on one or both surfaces of the current collector.

16. A lithium secondary battery comprising:
a positive electrode;
the negative electrode for a lithium secondary battery according to claim 15; and
a separator provided between the positive electrode and the negative electrode.

17. The lithium secondary battery of claim 16, wherein the lithium secondary battery is a cylindrical battery.

18. A battery module comprising the lithium secondary battery according to claim 16.

19. A battery pack comprising the battery module according to claim 18.

20. A battery pack comprising the lithium secondary battery according to claim 16.
